# EUROPEAN PATENT SPECIFICATION

(11) **EP 3 783 074 B1**
(45) Date of publication and mention of the grant of the patent: **10.08.2022**
(21) Application number: 19788618.7
(22) Date of filing: 15.04.2019
(51) Int. Cl.: C09D 143/04, C08F 220/18, C09D 5/16, C09D 201/00, C08F 220/28, C08F 230/08, C09D 133/14

(54) **COPOLYMER FOR ANTIFOULING COATING COMPOSITION AND ANTIFOULING COATING COMPOSITION CONTAINING SAID COPOLYMER**
COPOLYMER FÜR BEWUCHSHEMMENDE BESCHICHTUNGSZUSAMMENSETZUNG UND BEWUCHSHEMMENDE BESCHICHTUNGSZUSAMMENSETZUNG MIT BESAGTEM COPOLYMER
COPOLYMÈRE POUR COMPOSITION DE REVÊTEMENT ANTISALISSURE ET COMPOSITION DE REVÊTEMENT ANTISALISSURE CONTENANT LEDIT COPOLYMÈRE

(30) Priority: 20.04.2018 JP 2018081658
(43) Date of publication of application: 24.02.2021
(73) Proprietor: Nitto Kasei Co., Ltd., Osaka-shi Osaka 533-0031 (JP)
(72) Inventor: WAKU, Hidenori, Osaka-shi, Osaka 533-0031 (JP); MATSUKI, Takashi, Osaka-shi, Osaka 533-0031 (JP); KOBAYASHI, Satoshi, Osaka-shi, Osaka 533-0031 (JP); OKA, Nagato, Osaka-shi, Osaka 533-0031 (JP); YASUI, Takuya, Osaka-shi, Osaka 533-0031 (JP); ITO, Motomichi, Osaka-shi, Osaka 533-0031 (JP)
(74) Representative: Gulde & Partner
(86) International application number: PCT/JP2019/016126
(87) International publication number: WO 2019/203182

(56) References cited:
- EP-A1- 1 342 756
- EP-A1- 2 975 095
- EP-A1- 2 990 450
- WO-A1-01/81489
- WO-A1-2005/051884
- WO-A1-2010/071181
- WO-A1-2011/131742
- WO-A1-2014/141927
- JP-A- S6 357 676
- JP-A- H02 258 815
- JP-A- H07 150 076
- JP-A- H10 168 350
- JP-A- 2002 256 176
- JP-A- 2005 082 725
- JP-B1- 6 472 562

## Description

### Technical Field

The present invention relates to a copolymer for an antifouling coating composition and an antifouling coating composition containing the copolymer.

### Background Art

Aquatic fouling organisms such as barnacles, tubeworms, common mussels, Bugula neritina, sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, a technique which forms an antifouling coating film by coating an antifouling coating composition on a ship and the like, and allows controlled release of an antifouling agent to realize an antifouling performance for a long time has been known (Patent Literature 1).

At present, as an antifouling coating composition capable of forming an antifouling coating film having excellent physical properties from the viewpoint of crack resistance and stability of the amount of coating film dissolved, an antifouling coating composition using a copolymer containing triorganosilyl ester (e.g., triisopropylsilyl ester) having an alkyl group (e.g., isopropyl, s-butyl) in which the carbon atom directly bonded to the silicon atom is a secondary carbon has been known (Patent Literature 2). Patent literature 3 discloses further copolymers made from different monomers for antifouling coating compositions.

### Citation List

### Patent Literature

Patent Literature 1: JP 2000-17203 A
Patent Literature 2: JP 2005-82725 A
Patent Literature 3: EP 2 975 095 A1

### Summary of Invention

### Technical Problem

The antifouling coating film formed by using the antifouling coating composition using the copolymer containing triisopropylsilyl ester has excellent physical properties overall. However, there is a problem that the antifouling performance is not sufficiently realized in a draft section, which is waterline reached by water, because the coating film in the draft section is subjected to repeated dry and wet and is easily affected by various factors such as sunlight. Therefore, it is desired to further improve the physical properties of the coating film.

The present invention has been made by taking the afore-mentioned circumstances into consideration. The present invention provides a copolymer for an antifouling coating composition which can form an antifouling coating film which can continue to dissolve for a long period of time, exhibit good antifouling performance and realize good antifouling performance even in the draft section, where adhesion of aquatic fouling organisms is easy to occur.

### Solution to Problem

The invention is defined by the appended claims. The description that follows is subjected to this limitation. Any disclosure lying outside the scope of said claims is only intended for illustrative as well as comparative purposes. According to the present invention, a copolymer for an antifouling coating composition obtained by copolymerizing a monomer (a) and an ethylenically unsaturated monomer (b) other than the monomer (a), wherein the monomer (a) is represented by general formula (1) is provided, in which R¹ represents a hydrogen or a methyl group, R² and R³ represent an isopropyl group, and R⁴ represents an alkenyl group or a heteroaryl group.

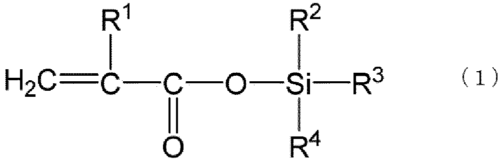

The present inventors have conducted intensive studies and have found that the antifouling coating film formed by using the antifouling coating composition using the above copolymer can continue to dissolve for a long period of time, exhibit good antifouling performance, and realize good antifouling performance even in the draft section, where adhesion of aquatic fouling organisms is easy to occur, thereby completing the present invention.

### Description of Embodiments

Hereinafter, the present invention will be described in detail.

### 1. Antifouling coating composition

The antifouling coating composition of the present invention includes a copolymer for an antifouling coating composition and an antifouling agent.

### 1-1. Copolymer for antifouling coating composition

The copolymer for the antifouling coating composition is obtained by copolymerizing a monomer (a) with an ethylenically unsaturated monomer (b) other than the monomer (a). The copolymer for antifouling coating composition contains monomer units derived from the monomers (a) to (b).

### <Monomer (a)>

The monomer (a) is a triorganosilyl (meth) acrylate monomer and is represented by general formula (1).

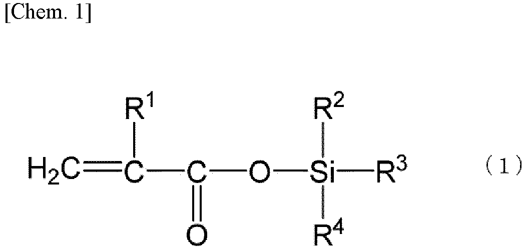

In the general formula (1), R¹ represents a hydrogen or a methyl group, R² and R³ represent an isopropyl group, and R⁴ represents an alkenyl group, or a heteroaryl group.

In the general formula (1), R⁴ represents an alkenyl group, an alkynyl group, or a heteroaryl group.

Examples of the alkenyl group include vinyl, 1-propenyl, isopropenyl, 1-methyl-1-propenyl, and 2-methyl-1-propenyl.

Examples of the alkynyl group include ethynyl phenylethynyl, and 1-propynyl.

Examples of the heteroaryl group include 2-thienyl, 3-thienyl, 3-methyl-2-thienyl and 5-chloro-2-thienyl.

Among these, from the viewpoint of manufacturing process, manufacturing cost, availability of raw materials, and environmental safety, an alkenyl group, and a heteroaryl group are preferable and vinyl, 1-propenyl, isopropenyl, 1-methyl-1-propenyl, 2,5-dimethoxyphenyl, and 2-thienyl are particularly preferable.

### <Monomer (b)>

The monomer (b) is an ethylenically unsaturated monomer other than the monomer (a) and examples of the monomer (b) include, (meth) acrylate esters, vinyl compounds, aromatic compounds and dialkyl ester compounds of a dibasic acid. In this specification, (meth) acrylate ester means acrylate ester or methacrylate ester.

Examples of the (meth) acrylate ester include methyl (meth) acrylate, ethyl (meth) acrylate, butyl (meth) acrylate, 2-ethylhexyl (meth) acrylate, 2-methoxyethyl (meth) acrylate, 2-methoxypropyl (meth) acrylate, 4-methoxybutyl (meth) acrylate, benzyl (meth) acrylate, phenyl (meth) acrylate, triisopropylsilyl (meth) acrylate, trioctylsilyl (meth) acrylate, t-butyldiphenylsilyl (meth) acrylate, and tributylsilyl (meth) acrylate.

Examples of the vinyl compounds include vinyl compounds having a functional group such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of a dibasic acid include dimethyl maleate, dibutyl maleate and dimethyl fumalate.

In the present invention, these monomers (b) can be used alone or two or more of these can be used in combination. In particular, as the monomer (b), (meth) acrylate ester and (meth) acrylate silyl ester are preferable, and methyl methacrylate, butyl (meth) acrylate, 2-methoxyethyl (meth) acrylate, triisopropylsilyl (meth) acrylate, trioctylsilyl (meth) acrylate and t-butyldiphenylsilyl (meth) acrylate are more preferable.

The copolymer is obtained by copolymerizing the monomer (a) and the monomer (b), and the content of the monomer (a) is preferably 0.5 to 50mass%, more preferably 1 to 25mass%. When the content of the monomer (a) is within the above range, in particular, the coating film can dissolve well and an excellent antifouling effect can be exhibited. The content of the monomer (a) is specifically, for example, 0.5, 1, 2, 3, 4, 5, 10, 15, 20, 25, 30, 35, 40, 45, 50mass% and may be in the range between the two values exemplified herein.

The weight average molecular weight (Mw) of the copolymer is preferably 5000 to 300,000. When the molecular weight is less than 5,000, the coating film of the antifouling coating becomes fragile and easily peels or cracks, and when it exceeds 300,000, the viscosity of the copolymer solution increases and handling becomes difficult. This Mw is specifically, for example, 5000, 10000, 20000, 30000, 40,000, 50000, 60000, 70000, 80000, 90000, 100000, 200,000, 300,000, and may be in the range between the two values exemplified herein.

Examples of the method for measuring Mw include gel permeation chromatography (GPC).

The copolymer may be a random copolymer, an alternating copolymer, a periodic copolymer, and a block copolymer of the monomer (a) and the monomer (b).

The copolymer can be obtained, for example, by polymerizing the monomer (a) and the monomer (b) under the presence of a polymerization initiator.

Examples of the polymerization initiator include azo compounds such as 2,2'-azobisisobutyronitrile, 2,2'-azobis (2-methylbutyronitrile), 2,2'-azobis (2,4-dimethylvaleronitrile), dimethyl-2,2'-azobisisobutyrate, dimethyl 2,2'-azobisisobutyrate, 2,2'-azobis (N-butyl-2-methylpropionamide; peroxides such as benzoylper oxide, di-tert-butyl peroxide, tert-butylperoxybenzoate, tert-butylperoxyisopropyl carbonate, t-butylperoxy-2-ethylhexanoate, t-hexylperoxy-2-ethylhexanoate , di-t-hexyl peroxide, t-butylperoxy-2-ethylhexyl monocarbonate, di-t-butyl peroxide, 1,1,3,3-tetramethylbutylperoxyneodecanoate, t-amilperoxyneodecanoate, t-hexylperoxypivalate, t-amylperoxypivalate, 1,1,3,3-tetramethylbutylperoxy-2-ethylhexanoate. These polymerization initiators can be used alone or two or more of these can be used in combination. As the polymerization initiators, 2,2'-azobisisobutyronitrile, 2,2'-azobis (2-methylbutyronitrile), 2,2'-azobis (2,4-dimethylvaleronitrile), dimethyl 2,2'-azobisisobutyrate and 1,1,3,3-tetramethylbutylperoxy-2 -ethylhexanoate are particularly preferable. The molecular weight of the copolymer for the antifouling coating composition can be adjusted by appropriately setting the amount of the polymerization initiator used.

Examples of the polymerization method include solution polymerization, bulk polymerization, emulsion polymerization, suspension polymerization and non-aqueous dispersion polymerization. Among these, solution polymerization and non-aqueous dispersion polymerization are particularly preferable in view of the capability of obtaining the copolymer simply with accuracy.

In the polymerization reaction, an organic solvent may be used if necessary. Examples of the organic solvent include aromatic hydrocarbon solvents such as xylene and toluene; aliphatic hydrocarbon solvents such as hexane, heptane, and mineral spirit; ester solvents such as ethyl acetate, butyl acetate, isobutyl acetate, methoxypropyl acetate, and 2-methoxy-1-methylethyl acetate; alcohol solvents such as isopropyl alcohol, butyl alcohol, 1-methoxy-2-propanol; ether solvents such as dioxane, diethyl ether, and dibutyl ether; ketone solvents methyl ethyl ketone, methyl isobutyl ketone, and cyclohexanone. Among these, aromatic hydrocarbon solvents are particularly preferable, and xylene is more preferable. These solvents can be used alone or two or more of these can be used in combination.

The reaction temperature in the polymerization reaction may be appropriately set according to the type of the polymerization initiator and is usually 60 to 150°C, preferably 70 to 140°C. The reaction time in the polymerization reaction may be appropriately set according to the reaction temperature and is usually about 4 to 8 hours.

The polymerization reaction is preferably performed under inert gas atmosphere such as nitrogen gas and argon gas.

### 1-2. Antifouling agent

As the antifouling agent, for example, an inorganic chemical and an organic chemical can be mentioned.

As the inorganic chemical, for example, cuprous oxide, cuprous thiocyanate (generic name: copper rhodanide), and copper powder can be mentioned. Among these, cuprous oxide and copper rhodanide are particularly preferable. From the viewpoint of long-term storage stability, the cuprous oxide surface-treated with glycerin, sucrose, stearic acid, lauric acid, lecithin and mineral oil, is more preferable.

As the organic chemical, for example, copper 2-mercaptopyridine-N-oxide (generic name: copper pyrithione), zinc 2-mercaptopyridine-N-oxide (generic name: zinc pyrithione), zinc ethylenebis(dithiocarbamate) (generic name: zineb), 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name: ECONEA 28), (±)-4-[1-(2,3-dimethylphenyl)ethyl]-1H-imidazole (generic name: Medetomidine) can be mentioned.

These antifouling agents can be used alone, or two or more of these can be used in combination.

### 1-3. Other additives

Further, if necessary, the resin for antifouling coating of the present invention is added with an elution regulator, a plasticizer, a pigment, a dye, an antifoaming agent, a dehydrating agent, a thixotropic agent and an organic solvent to obtain the antifouling coating.

As the elution regulator, monocarboxylic acids and salts thereof, such as rosin, rosin derivatives, naphthenic acid, cycloalkenyl carboxylic acid, bicycloalkenyl carboxylic acid, versatic acid, trimethyl isobutenylcyclohexene carboxylic acid, and their metal salts, or the alicyclic hydrocarbon resins as mentioned above can be exemplified. These can be used alone, or two or more of these can be used in combination.

As the rosin derivative, hydrogenated rosin, disproportionated rosin, maleic acid modified rosin, formylated rosin and polymerized rosin can be exemplified. As the alicyclic hydrocarbon resins, Quintone 1500, Quintone 1525L, and Quintone 1700 (product name, available from Zeon Corporation) can be mentioned as commercially available product for example.

As the plasticizer, for example, phosphoric acid esters, phthalic acid esters, adipic acid esters, sebacic acid esters, epoxidized soybean oil, alkyl vinyl ether polymer, polyalkylene glycols, t-nonyl pentasulfide, vaseline, polybutene, tris(2-ethylhexyl) trimellitate, silicone oil, liquid paraffin and chlorinated paraffin can be mentioned. These can be used alone, or two or more of these can be used in combination.

As the dehydrating agent include, for example, synthetic zeolite adsorbents, orthoesters, silicates such as tetramethoxysilane and tetraethoxysilane, isocyanates, carbodiimides, carbodiimidazoles can be mentioned. These can be used alone, or two or more of these can be used in combination.

### 2. Manufacturing method of antifouling coating composition

The antifouling coating composition of the present invention can be manufactured, for example, by mixing and dispersing a mixture solution including the copolymer, the antifouling agent, and other additives using a disperser.

Regarding the mixture solution, the ingredients such as the copolymers, the antifouling agent are preferably dissolved or dispersed in the solvent.

As the disperser, for example, the one which can be used as a micro-pulverizer can be suitably used. For example, a commercially available dissolver, homo mixer, sand mill, bead mill can be used. Furthermore, the mixed solution can be mixed and dispersed by using a stirrer-equipped container containing glass beads for mixing and dispersing.

### 3. Method for antifouling treatment, antifouling coating film, and coated object

The method for antifouling treatment of the present invention is characterized in that an antifouling coating film is formed using the above-explained antifouling coating composition on the surface of an object that is subjected to coating. The method for antifouling treatment of the present invention can prevent adhesion of aquatic fouling organisms by the gradual dissolution of the surface of the antifouling coating film such that the surface of the coating film is continually renewed.

Examples of objects on which the coating film can be formed include ships (in particular, ship bottoms), fishing tools, structures submerged in seawater.

The thickness of the antifouling coating film can be suitably selected depending on the type of the object on which the coating film is to be formed, the navigation speed of a ship, the seawater temperature. For example, when the object on which a coating film is formed is a ship bottom, the thickness of the antifouling coating film is usually 50 to 700 µm, and preferably 100 to 600 µm.

### EXAMPLES

Examples and the like are provided hereinafter, and further clarifies characteristics of the present invention. The present invention, however, is not limited to these Examples.

Production Examples 17 to 22 and 32 to 37 as well as the corresponding Examples 7 to 12 and 22 to 27 do not fall under the present invention.

In each of Production Examples, Comparative Production Examples, and Examples, "%" denotes "% by mass".

The viscosity was measured with a Brookfield viscometer at 25°C in accordance with JIS K7117-1.

The weight average molecular weight (Mw) was determined by gel permeation chromatography (GPC) (using a polystyrene standard). GPC was performed under the following conditions.
Equipment: HLC-8220 GPC (available from Tosoh Corporation)
Column: TSK-gel Super HZM-M, two columns used
Flow rate: 0.35 mL/min
Detector: RI
Column thermostat temperature: 40°C
Developing solvent: THF

The non-volatile content was measured in accordance with JIS K 5601-1-2:1999 (ISO 3251:1993).

### <Production Example 1 (Production of monomer (a-1))>

### << (a) Preparation of Grignard reagent 1 (isopropylmagnesium chloride) >>

To a four-necked flask equipped with a thermometer, a cooler, a stirrer, and a dropping funnel, 255 g (10.5 mol) of metallic magnesium and 3625 g of tetrahydrafuran were charged, and 825 g (10.5 mol) of isopropyl chloride was added dropwise over 4 hours under nitrogen gas atmosphere. During the dropping, the temperature of the reaction mixture in the flask was maintained at 40 to 50°C. Then, the mixture was heated and stirred at 40 to 50°C for 2 hours to obtain a THF solution of isopropylmagnesium chloride.

### <<(b) Preparation of Grignard reagent 2 (1-methyl-1-propenylmagnesium chloride)>>

To a four-necked flask equipped with a thermometer, a cooler, a stirrer, and a dropping funnel, 129 g (5.3 mol) of metallic magnesium and 1810 g of tetrahydrafuran were charged, and 480 g (5.3 mol) of 1-methyl-1-propenyl chloride was added dropwise over 2 hours under nitrogen gas atmosphere. During the dropping, the temperature of the reaction mixture in the flask was maintained at 40 to 50°C. Then, the mixture was heated and stirred at 40 to 50°C for 2 hours, and then a THF solution of 1-methyl-1-propenylmagnesium chloride was obtained.

To the THF solution of isopropylmagnesium chloride obtained in (a) described above, 625 g (4.6 mol) of trichlorosilane was added dropwise under a nitrogen gas atmosphere over 3 hours. During the dropping, the temperature of the reaction mixture in the flask was maintained at 40 to 50°C. Then, the reaction mixture in the flask was heated and stirred at 40 to 50°C for 1 hour, and then the THF solution of 1-methyl-l-propenylmagnesium chloride obtained in (b) described above was added dropwise over 1 hour. During the dropping, the temperature of the reaction mixture in the flask was maintained at 40 to 50°C. Then, 1.0 g (0.0074 mol) of copper (I) chloride was added, and the reaction mixture in the flask was heated and stirred at 30 to 40°C for 5 hours. To the obtained reaction solution, 600 mL of water was added dropwise to dissolve the magnesium salt. The organic layer separated from the aqueous layer was distilled under reduced pressure to obtain 235 g of diisopropyl 1-methyl-1-propenylsilane as a fraction having a boiling point of 96°C/33 to 34 mmHg.

To a four-necked flask equipped with a thermometer, a cooler, a stirrer and a dropping funnel, 195 g (1.1 mol) of the diisopropyll-methyl-1-propenylsilane obtained above and 400 g of toluene were charged and 78 g (1.1 mol) of chlorine gas was blown into it over 2 hours. During the blowing, the temperature of the reaction mixture in the flask was maintained at 5 to 15°C. Into the reaction solution, 5 L of nitrogen gas was blown to expel dissolved chlorine and hydrogen chloride. The reaction solution was distilled under reduced pressure to obtain 204 g of diisopropyll-methyl-1-propenylsilyl chloride as a fraction having a boiling point of 120 to 140°C/20 to 30 mmHg.

To a four-necked flask equipped with a thermometer, a cooler, a stirrer, and a dropping funnel, 204 g (1.0 mol) of diisopropyll-methyl-1-propenylsilyl chloride obtained above, 114 g (1.1 mol) of triethylamine, 0.01 g of 4-methoxyphenol, 0.01 g of 2,6-di-tert-butyl-4-methylphenol and 204 g of hexane were charged, and 114 g (1.3 mol) of methacrylic acid was added dropwise over 2 hours. During the dropping, the temperature of the reaction mixture in the flask was maintained at 40 to 50°C. Then, the mixture was heated and stirred at 40 to 50°C for 3 hours. To the reaction solution, 150 mL of water was added dropwise, and the organic layer was taken out. The organic layer was distilled under reduced pressure to obtain 190 g of diisopropyl-1-methyl-1-propenylsilyl methacrylate as a fraction having a boiling point of 70 to 80°C/l to 2 mmHg.

### <Production Example 2 (Production of monomer (a-2))>

Isopropenyl chloride was used instead of 1-methyl-1-propenyl chloride and reaction was performed by processes similar to those of Production Example 1 to obtain diisopropylisopropenylsilyl methacrylate.

### <Production Example 3 (Production of monomer (a-3))>

Using 2,5-dimethoxyphenyl chloride instead of 1-methyl-1-propenyl chloride, reaction was performed by a process similar to those of Production Example 1 to obtain diisopropyl 2,5-dimethoxyphenylsilyl methacrylate.

### <Production Example 4 (Production of monomer (a-4))>

Pentafluorophenyl bromide was used instead of 1-methyl-1-propenyl chloride and reaction was performed by a process similar to those of Production Example 1 to obtain diisopropylpentafluorophenylsilyl methacrylate.

### <Production Example 5 (Production of monomer (a-5))>

Using 2-thienyl bromide instead of 1-methyl-1-propenyl chloride, reaction was performed by processes similar to those of Production Example 1 to obtain diisopropyl 2-thienylsilyl methacrylate.

### <Production Example 6 (Production of monomer (a-6))>

Acrylic acid was used instead of methacrylic acid, and the reaction was performed by processes similar to those of Production Example 1 to obtain diisopropyll-methyl-1-propenylsilyl acrylate.

### <Production Example 7 (Production of monomer (a-7))>

Acrylic acid was used instead of methacrylic acid, and the reaction was performed by processes similar to those of Production Example 2 to obtain diisopropylisopropenylsilyl acrylate.

### <Production Example 8 (Production of monomer (a-8))>

Acrylic acid was used instead of methacrylic acid, and the reaction was performed by processes similar to those of Production Example 3 to obtain diisopropyl 2,5-dimethoxyphenylsilyl acrylate.

### <Production Example 9 (Production of monomer (a-9))>

Acrylic acid was used instead of methacrylic acid, and the reaction was performed by processes similar to those of Production Example 4 to obtain diisopropylpentafluorophenylsilyl acrylate.

### <Production Example 10 (Production of monomer (a-10))>

Acrylic acid was used instead of methacrylic acid, and the reaction was performed by processes similar to those of Production Example 5 to obtain diisopropyl 2-thienylsilyl acrylate.

### <Production Example 11 (Production of copolymer solution P1)>

To a four-necked flask equipped with a thermometer, a cooler, a stirrer, and a dropping funnel, 34 g (initial solvent) of xylene was charged, nitrogen gas was introduced, and the temperature was maintained at 85 °C with agitation. Into the flack, a mixed solution of 50 g of monomer (a-1), 6 g of methyl methacrylate, 4 g of n-butyl acrylate, 6 g of 2-methoxyethyl acrylate, 34 g of 2-methoxyethyl methacrylate, 1g of 1,1,3,3-tetramethylbutylperoxy-2-ethylhexanoate (initial addition) was added dropwise over 3 hours while maintaining at 85°C. After stirring at 85°C for 1 hour, 0.1 g of 1,1,3,3-tetramethylbutylperoxy-2-ethylhexanoate (post addition) was added 3 times every hour. After further stirring at the same temperature for 2 hours, 66 g of xylene (diluting solvent) was added and the mixture was cooled to room temperature to obtain a copolymer solution P1, Table 1 shows the non-volatile content, Mw, and viscosity of P1,

### <Production Examples 12 to 40 (Production of copolymer solutions P2 to P30)>

The monomers, polymerization initiators, and solvents shown in Tables 1 and 2 were used and polymerization reaction was performed under each reaction temperature condition by processes similar to those of Example 1 to obtain copolymer solutions P2 to P30. Tables 1 and 2 show the non-volatile content, Mw, and viscosity of P2 to P30. The numerical value in the table is mass%.

**[Table 1]**

| Table 1 | component | Production Example | | | | | | | | | | | | | | |
|---|---|---|---|---|---|---|---|---|---|---|---|---|---|---|---|---|
| | | 11 | 12 | 13 | 14 | 15 | 16 | 17 | 18 | 19 | 20 | 21 | 22 | 23 | 24 | 25 |
| initial solvent | xylene | 34 | 33 | 32 | 34 | 33 | 32 | 34 | 33 | 32 | 34 | 33 | 32 | 34 | 33 | 32 |
| silyl monomer (a) | a-1 | 50 | 25 | 0.5 | | | | | | | | | | | | |
| | a-2 | | | | 50 | 25 | 0.5 | | | | | | | | | |
| | a-3 | | | | | | | 50 | 25 | 0.5 | | | | | | |
| | a-4 | | | | | | | | | | 50 | 25 | 0.5 | | | |
| | a-5 | | | | | | | | | | | | | 50 | 25 | 0.5 |
| other monomer (b) | trisopropylsilyl methacrylate | | 25 | 49.5 | | 25 | 49.5 | | 25 | 49.5 | | 25 | 49.5 | | 25 | 49.5 |
| | methyl methacrylate | 6 | 6 | 6 | 6 | 6 | 6 | 6 | 6 | 6 | 6 | 6 | 6 | 6 | 6 | 6 |
| | n-butyl acrylate | 4 | 4 | 4 | 4 | 4 | 4 | 4 | 4 | 4 | 4 | 4 | 4 | 4 | 4 | 4 |
| | 2-methoxyethyl acrylate | 6 | 6 | 6 | 6 | 6 | 6 | 6 | 6 | 6 | 6 | 6 | 6 | 6 | 6 | 6 |
| | 2-methoxyethyl methacrylate | 34 | 34 | 34 | 34 | 34 | 34 | 34 | 34 | 34 | 34 | 34 | 34 | 34 | 34 | 34 |
| polymerization | initial addition | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| initiator | post addition 3 times | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| diluting solvent | xylene | 66 | 67 | 68 | 66 | 67 | 68 | 66 | 67 | 68 | 66 | 67 | 68 | 66 | 67 | 68 |
| reaction | temperature [°C] (within ±5°C) | 85 | 85 | 85 | 85 | 85 | 85 | 85 | 85 | 85 | 85 | 85 | 85 | 85 | 85 | 85 |
| physical properties of copolymer solution | non-volatile content [%] | 50 | 50 | 50 | 50 | 50 | 50 | 50 | 50 | 50 | 50 | 50 | 50 | 50 | 50 | 50 |
| | weight average molecular weight [Mw] | 50,500 | 51,900 | 50.400 | 52,200 | 49,900 | 50,400 | 50,200 | 49,500 | 51,500 | 49,300 | 49,700 | 50,400 | 49,900 | 50,100 | 50,200 |
| | viscosity [mPa·s] (25°C) | 320 | 310 | 320 | 330 | 300 | 320 | 370 | 350 | 340 | 360 | 320 | 330 | 350 | 340 | 330 |
| | copolymer solution | P1 | P2 | P3 | P4 | P5 | P6 | P7 | P8 | P9 | P10 | P11 | P12 | P13 | P14 | P15 |

**[Table 2]**

| Table 2 | component | Production Example | | | | | | | | | | | | | | |
|---|---|---|---|---|---|---|---|---|---|---|---|---|---|---|---|---|
| | | 26 | 27 | 28 | 29 | 30 | 31 | 32 | 33 | 34 | 35 | 36 | 37 | 38 | 39 | 40 |
| initial solvent | xylene | 42 | 41 | 40 | 42 | 41 | 40 | 42 | 41 | 40 | 42 | 41 | 40 | 42 | 41 | 40 |
| silyl monomer (a) | a-6 | 54 | 27 | 0.5 | | | | | | | | | | | | |
| | a-7 | | | | 54 | 27 | 0.5 | | | | | | | | | |
| | a-8 | | | | | | | 54 | 27 | 0.5 | | | | | | |
| | a-9 | | | | | | | | | | 54 | 27 | 0.5 | | | |
| | a-10 | | | | | | | | | | | | | 54 | 27 | 0.5 |
| other monomer (b) | trisopropylsilyl acrylate | | 27 | 53.5 | | 27 | 53.5 | | 27 | 53.5 | | 27 | 53.5 | | 27 | 53.5 |
| | methyl methacrylate | 38 | 38 | 38 | 38 | 38 | 38 | 38 | 38 | 38 | 38 | 38 | 38 | 38 | 38 | 38 |
| | n-butyl acrylate | 3 | 3 | 3 | 3 | 3 | 3 | 3 | 3 | 3 | 3 | 3 | 3 | 3 | 3 | 3 |
| | 2-methoxyethyl acrylate | 5 | 5 | 5 | 5 | 5 | 5 | 5 | 5 | 5 | 5 | 5 | 5 | 5 | 5 | 5 |
| polymerization initiator | initial addition | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| | post addition 3 times | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| diluting solvent | xylene | 58 | 59 | 60 | 58 | 59 | 60 | 58 | 59 | 60 | 58 | 59 | 60 | 58 | 59 | 60 |
| reaction temperature [°C] (within ±5°C) | | 90 | 90 | 90 | 90 | 90 | 90 | 90 | 90 | 90 | 90 | 90 | 90 | 90 | 90 | 90 |
| physical properties of copolymer solution | non-volatile content [%] | 50 | 50 | 50 | 50 | 50 | 50 | 50 | 50 | 50 | 50 | 50 | 50 | 50 | 50 | 50 |
| | weight average molecular weight [Mw] | 51,700 | 49,800 | 50,800 | 48,000 | 47,400 | 48,700 | 48,000 | 47,500 | 47,200 | 49,000 | 48,300 | 47,600 | 47,000 | 47,000 | 49,300 |
| | viscosity [mPa·s] (25°C) | 350 | 340 | 340 | 360 | 340 | 350 | 380 | 370 | 350 | 370 | 360 | 340 | 360 | 350 | 360 |
| | copolymer solution | P16 | P17 | P18 | P19 | P20 | P21 | P22 | P23 | P24 | P25 | P26 | P27 | P28 | P29 | P30 |

### <Comparative Production Example 1 (Production of monomer (c-1))>

To 318 g (0.7 mol) of a THF solution of isopropylmagnesium chloride obtained by processes similar to those of Production Example 1, 139 g (0.6 mol) of dichlorodiphenylsilane was added dropwise over 3 hours under nitrogen gas atmosphere. During the dropping, the temperature of the reaction mixture in the flask was maintained at 40 to 50°C. Then, the reaction mixture in the flask was heated and stirred at 40 to 50°C for 1 hour. Then, 0.17 g (0.0013 mol) of copper (I) chloride was added, and the reaction mixture in the flask was heated and stirred at 30 to 40°C for 5 hours. Then, 100 mL of water was added dropwise to the obtained reaction solution to dissolve the magnesium salt. The organic layer separated from the aqueous layer was distilled under reduced pressure to obtain 101 g of diphenylisopropylsilyl chloride as a fraction having a boiling point of 166°C/20 to 30 mmHg.

To a four-necked flask equipped with a thermometer, a cooler, a stirrer, and a dropping funnel, 85 g (0.3 mol) of diphenylisopropylsilyl chloride obtained above, 32 g (0.3 mol) of triethylamine, 0. 003 g of 4-methoxyphenol, 0.003 g of 2,6-di-tert-butyl-4-methylphenol, and 120 g of hexane were charged, and 27 g (0.3 mol) of methacrylic acid was added dropwise over 2 hours. During the dropping, the temperature of the reaction mixture in the flask was maintained at 40 to 50°C. Then, the mixture was heated and stirred at 40 to 50°C for 3 hours and 35 mL of water was added dropwise to the reaction solution, and the organic layer was taken out. The organic layer was distilled under reduced pressure to obtain 60 g of diphenylisopropylsilyl methacrylate as a fraction having a boiling point of 110°C/1 to 2 mmHg.

### <Comparative Production Example 2 (Production of monomer (c-2))>

Acrylic acid was used instead of methacrylic acid, and the reaction was performed by processes similar to those of Comparative Production Example 1 to obtain diphenylisopropylsilyl acrylate.

### <Comparative Production Examples 3 to 6 (Production of copolymer solutions T1 to T4)>

The monomers, polymerization initiators, and solvents shown in Table 3 were used and polymerization reaction was performed under each reaction temperature condition by processes similar to those of Example 1 to obtain copolymer solutions T1 to T4. Table 3 shows the heating residue, Mw, and viscosity of T1 to T4. The numerical value in the table is mass%.

**[Table 3]**

| Table 3 | component | Comparative Production Example | | | |
|---|---|---|---|---|---|
| | | 3 | 4 | 5 | 6 |
| initial solvent | xylene | 32 | 36 | 40 | 45 |
| silyl monomer (c) | c-1 | | 50 | | |
| | c-2 | | | | 54 |
| other monomer (b) | trisopropylsilyl methacrylate | 50 | | 54 | |
| | methyl methacrylate | 6 | 6 | 38 | 38 |
| | n-butyl acrylate | 4 | 4 | 3 | 3 |
| | 2-methoxyethyl acrylate | 6 | 6 | 5 | 5 |
| | 2-methoxyethyl methacrylate | 34 | 34 | | |
| polymerization initiator | initial addition | 1.0 | 1.0 | 0.8 | 0.8 |
| | post addition 3 times | 0.1 | 0.1 | 0.1 | 0.1 |
| diluting solvent | xylene | 68 | 64 | 60 | 55 |
| reaction temperature [°C] (within ±5°C) | | 85 | 85 | 90 | 90 |
| physical properties of copolymer solution | non-volatile content [%] | 50 | 50 | 50 | 50 |
| | weight average molecular weight [Mw] | 49,100 | 60,000 | 49,000 | 50,500 |
| | viscosity [mPa·s] (25°C) | 310 | 690 | 360 | 350 |
| | copolymer solution | T1 | T2 | T3 | T4 |

### <Production Example 41 (Production of rosin zinc salt solution)>

To a flask equipped with a thermometer, a reflux condenser, and a stirrer, 240 g of Chinese gum rosin and 360 g of xylene were charged in the flask, and 120 g of zinc oxide was further added so that all the resin acids in the rosin formed zinc salts. The mixture was refluxed and dehydrated at 70 to 80°C for 3 hours under reduced pressure, cooled and filtered to obtain a xylene solution of rosin zinc salt (dark brown liquid, solid content 50%). The non-volatile content of the obtained solution was 50.2%.

### <Production Example 42 (Production of hydrogenated rosin zinc salt solution)>

To a flask equipped with a thermometer, a reflux condenser, and a stirrer, 240 g of HYPALE CH (hydrogenated gum rosin) and 360 g of xylene were charged, and 120 g of zinc oxide was further added so that all the resin acids in the rosin form zinc salts. The mixture was refluxed and dehydrated at 70 to 80°C for 3 hours under reduced pressure, then concentrated, cooled, and filtered to obtain a xylene solution of hydrogenated rosin zinc salt (dark brown liquid, solid content 65%). The non-volatile content of the obtained solution was 65.1%.

### <Examples 1 to 30 and Comparative Examples 1 to 4> Production of coating composition

The copolymer solutions P1 to P30 obtained in Production Examples 11 to 40, the copolymer solutions T1 to T4 obtained in Comparative Production Examples 3 to 6 were used and antifouling coating compositions of Examples 1 to 30 and Comparative Examples 1 to 4 were formulated by the content ratio shown in Tables 4 to 7. The numerical value in the table is mass%.

Details of the antifouling agents and other additives in Tables 4 to 7 are as follows.

### [Table 4]

**Table 4**

| component | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| copolymer solution (P) | P1 | | 18 | | | | | | | | | |
| | P2 | | | 18 | | | | | | | | |
| | P3 | | | | 18 | | | | | | | |
| | P4 | | | | | 18 | | | | | | |
| | P5 | | | | | | 18 | | | | | |
| | P6 | | | | | | | 18 | | | | |
| | P7 | | | | | | | | 18 | | | |
| | P8 | | | | | | | | | 18 | | |
| | P9 | | | | | | | | | | 18 | |
| | P10 | | | | | | | | | | | 18 |
| antifouling agent | cuprous oxide | | 35 | 35 | 35 | 35 | 35 | 35 | 35 | 35 | 35 | 35 |
| | copper pyrithione | | 1.5 | 1.5 | 1.5 | 1.5 | 1.5 | 1.5 | 1.5 | 1.5 | 1.5 | 1.5 |
| | copper (I) thiocyanate | | 1 | 1 | 1 | 1 | 1 | 1 | 1 | 1 | 1 | 1 |
| | Zineb | | 1 | 1 | 1 | 1 | 1 | 1 | 1 | 1 | 1 | 1 |
| | SeaNine 211 | | 3 | 3 | 3 | 3 | 3 | 3 | 3 | 3 | 3 | 3 |
| | Econea | | 1 | 1 | 1 | 1 | 1 | 1 | 1 | 1 | 1 | 1 |
| | medetomidine | | 0.1 | 0.1 | 0.1 | 0.1 | 0.1 | 0.1 | 0.1 | 0.1 | 0.1 | 0.1 |
| other additives | chlorinated paraffin | | 1 | 1 | 1 | 1 | 1 | 1 | 1 | 1 | 1 | 1 |
| | tris (2-ethylhexyl) trimellitic acid | | 1 | 1 | 1 | 1 | 1 | 1 | 1 | 1 | 1 | 1 |
| | rosin zinc salt solution | | 7 | 7 | 7 | 7 | 7 | 7 | 7 | 7 | 7 | 7 |
| | gum rosin solution | | 2 | 2 | 2 | 2 | 2 | 2 | 2 | 2 | 2 | 2 |
| | hydrogenated rosin solution | | 2 | 2 | 2 | 2 | 2 | 2 | 2 | 2 | 2 | 2 |
| | hydrogenated rosin zinc salt solution | | 5 | 5 | 5 | 5 | 5 | 5 | 5 | 5 | 5 | 5 |
| | red oxide | | 3 | 3 | 3 | 3 | 3 | 3 | 3 | 3 | 3 | 3 |
| | talc | | 9 | 9 | 9 | 9 | 9 | 9 | 9 | 9 | 9 | 9 |
| | zinc oxide | | 5 | 5 | 5 | 5 | 5 | 5 | 5 | 5 | 5 | 5 |
| | titanium oxide | | 0.3 | 0.3 | 0.3 | 0.3 | 0.3 | 0.3 | 0.3 | 0.3 | 0.3 | 0.3 |
| | Ethyl Silicate 28 | | 1 | 1 | 1 | 1 | 1 | 1 | 1 | 1 | 1 | 1 |
| | anhydrous gypsum | | 1 | 1 | 1 | 1 | 1 | 1 | 1 | 1 | 1 | 1 |
| | Disparlon A603-20X | | 0.4 | 0.4 | 0.4 | 0.4 | 0.4 | 0.4 | 0.4 | 0.4 | 0.4 | 0.4 |
| | Disparlon 4200-20 | | 0.2 | 0.2 | 0.2 | 0.2 | 0.2 | 0.2 | 0.2 | 0.2 | 0.2 | 0.2 |
| solvent | xylene | | 1.5 | 1.5 | 1.5 | 1.5 | 1.5 | 1.5 | 1.5 | 1.5 | 1.5 | 1.5 |
| sum | | | 100.0 | 100.0 | 100.0 | 100.0 | 100.0 | 100.0 | 100.0 | 100.0 | 100.0 | 100.0 |
| Test Example 1 rotary test | amount of coating film dissolved (*µ*m) | 3 months | 12 | 17 | 19 | 15 | 21 | 19 | 41 | 44 | 20 | 14 |
| | | 6 months | 18 | 32 | 45 | 29 | 45 | 46 | 86 | 80 | 48 | 26 |
| | | 12 months | 37 | 63 | 96 | 58 | 98 | 107 | 176 | 11 | 112 | 47 |
| | | 24 months | 81 | 118 | 192 | 118 | 183 | 229 | 357 | 295 | 243 | 93 |
| | evaluation of condition of coating film after 24 months | | AA | AA | AA | AA | AA | AA | AA | AA | AA | AA |
| Test Example 2 antifouling test | 12 months | | AA | AA | AA | AA | AA | AA | AA | AA | AA | AA |
| | 24 months | | A | A | A | A | A | A | A | A | A | AA |
| Test Example 3 Wet and dry cycle test | 6 months | | O | O | O | O | O | O | O | O | O | O |

### [Table 5]

**Table 5**

| component | | | Example | | | | | | | | | |
|---|---|---|---|---|---|---|---|---|---|---|---|---|
| | | | 11 | 12 | 13 | 14 | 15 | 16 | 17 | 18 | 19 | 20 |
| copolymer solution (P) | P11 | | 18 | | | | | | | | | |
| | P12 | | | 18 | | | | | | | | |
| | P13 | | | | 18 | | | | | | | |
| | P14 | | | | | 18 | | | | | | |
| | P15 | | | | | | 18 | | | | | |
| | P16 | | | | | | | 18 | | | | |
| | P17 | | | | | | | | 18 | | | |
| | P18 | | | | | | | | | 18 | | |
| | P19 | | | | | | | | | | 18 | |
| | P20 | | | | | | | | | | | 18 |
| antifouling agent | cuprous oxide | | 35 | 35 | 35 | 35 | 35 | 35 | 35 | 35 | 35 | 35 |
| | copper pyrithione | | 1.5 | 1.5 | 1.5 | 1.5 | 1.5 | 1.5 | 1.5 | 1.5 | 1.5 | 1.5 |
| | copper (I) thiocyanate | | 1 | 1 | 1 | 1 | 1 | 1 | 1 | 1 | 1 | 1 |
| | Zineb | | 1 | 1 | 1 | 1 | 1 | 1 | 1 | 1 | 1 | 1 |
| | SeaNine 211 | | 3 | 3 | 3 | 3 | 3 | 3 | 3 | 3 | 3 | 3 |
| | Econea | | 1 | 1 | 1 | 1 | 1 | 1 | 1 | 1 | 1 | 1 |
| | medetomidine | | 0.1 | 0.1 | 0.1 | 0.1 | 0.1 | 0.1 | 0.1 | 0.1 | 0.1 | 0.1 |
| other additives | chlorinated paraffin | | 1 | 1 | 1 | 1 | 1 | 1 | 1 | 1 | 1 | 1 |
| | tris (2-ethylhexyl) trimellitic acid | | 1 | 1 | 1 | 1 | 1 | 1 | 1 | 1 | 1 | 1 |
| | rosin zinc salt solution | | 7 | 7 | 7 | 7 | 7 | 7 | 7 | 7 | 7 | 7 |
| | gum rosin solution | | 2 | 2 | 2 | 2 | 2 | 2 | 2 | 2 | 2 | 2 |
| | hydrogenated rosin solution | | 2 | 2 | 2 | 2 | 2 | 2 | 2 | 2 | 2 | 2 |
| | hydrogenated rosin zinc salt solution | | 5 | 5 | 5 | 5 | 5 | 5 | 5 | 5 | 5 | 5 |
| | red oxide | | 3 | 3 | 3 | 3 | 3 | 3 | 3 | 3 | 3 | 3 |
| | talc | | 9 | 9 | 9 | 9 | 9 | 9 | 9 | 9 | 9 | 9 |
| | zinc oxide | | 5 | 5 | 5 | 5 | 5 | 5 | 5 | 5 | 5 | 5 |
| | titanium oxide | | 0.3 | 0.3 | 0.3 | 0.3 | 0.3 | 0.3 | 0.3 | 0.3 | 0.3 | 0.3 |
| | Ethyl Silicate 28 | | 1 | 1 | 1 | 1 | 1 | 1 | 1 | 1 | 1 | 1 |
| | anhydrous gypsum | | 1 | 1 | 1 | 1 | 1 | 1 | 1 | 1 | 1 | 1 |
| | Disparlon A603-20X | | 0.4 | 0.4 | 0.4 | 0.4 | 0.4 | 0.4 | 0.4 | 0.4 | 0.4 | 0.4 |
| | Disparlon 4200-20 | | 0.2 | 0.2 | 0.2 | 0.2 | 0.2 | 0.2 | 0.2 | 0.2 | 0.2 | 0.2 |
| solvent | xylene | | 1.5 | 1.5 | 1.5 | 1.5 | 1.5 | 1.5 | 1.5 | 1.5 | 1.5 | 1.5 |
| sum | | | 100.0 | 100.0 | 100.0 | 100.0 | 100.0 | 100.0 | 100.0 | 100.0 | 100.0 | 100.0 |
| Test Example 1 rotary test | amount of coating film dissolved (*µ*m) | 3 months | 18 | 18 | 56 | 36 | 19 | 7 | 12 | 9 | 9 | 8 |
| | | 6 months | 32 | 45 | 111 | 82 | 47 | 15 | 22 | 19 | 18 | 20 |
| | | 12 months | 58 | 105 | 193 | 143 | 115 | 27 | 43 | 61 | 50 | 59 |
| | | 24 months | 124 | 233 | 336 | 304 | 245 | 55 | 87 | 148 | 112 | 141 |
| | evaluation of condition of coating film after 24 months | | AA | AA | AA | AA | AA | AA | AA | AA | AA | AA |
| Test Example 2 antifouling test | 12 months | | AA | AA | AA | AA | AA | AA | AA | AA | AA | AA |
| | 24 months | | AA | AA | A | A | A | A | A | A | A | A |
| Test Example 3 Wet and dry cycle test | 6 months | | O | O | O | O | O | O | O | O | O | O |

### [Table 6]

**Table 6**

| component | | | Example | | | | | | | | | |
|---|---|---|---|---|---|---|---|---|---|---|---|---|
| | | | 21 | 22 | 23 | 24 | 25 | 26 | 27 | 28 | 29 | 30 |
| copolymer solution (P) | P21 | | 18 | | | | | | | | | |
| | P22 | | | 18 | | | | | | | | |
| | P23 | | | | 18 | | | | | | | |
| | P24 | | | | | 18 | | | | | | |
| | P25 | | | | | | 18 | | | | | |
| | P26 | | | | | | | 18 | | | | |
| | P27 | | | | | | | | 18 | | | |
| | P28 | | | | | | | | | 18 | | |
| | P29 | | | | | | | | | | 18 | |
| | P30 | | | | | | | | | | | 18 |
| antifouling agent | cuprous oxide | | 35 | 35 | 35 | 35 | 35 | 35 | 35 | 35 | 35 | 35 |
| | copper pyrithione | | 1.5 | 1.5 | 1.5 | 1.5 | 1.5 | 1.5 | 1.5 | 1.5 | 1.5 | 1.5 |
| | copper (I) thiocyanate | | 1 | 1 | 1 | 1 | 1 | 1 | 1 | 1 | 1 | 1 |
| | Zineb | | 1 | 1 | 1 | 1 | 1 | 1 | 1 | 1 | 1 | 1 |
| | SeaNine 211 | | 3 | 3 | 3 | 3 | 3 | 3 | 3 | 3 | 3 | 3 |
| | Econea | | 1 | 1 | 1 | 1 | 1 | 1 | 1 | 1 | 1 | 1 |
| | medetomidine | | 0.1 | 0.1 | 0.1 | 0.1 | 0.1 | 0.1 | 0.1 | 0.1 | 0.1 | 0.1 |
| other additives | chlorinated paraffin 1 | | | 1 | 1 | 1 | 1 | 1 | 1 | 1 | 1 | 1 |
| | tris (2-ethylhexyl) trimellitic acid | | 1 | 1 | 1 | 1 | 1 | 1 | 1 | 1 | 1 | 1 |
| | rosin zinc salt solution | | 7 | 7 | 7 | 7 | 7 | 7 | 7 | 7 | 7 | 7 |
| | gum rosin solution | | 2 | 2 | 2 | 2 | 2 | 2 | 2 | 2 | 2 | 2 |
| | hydrogenated rosin solution | | 2 | 2 | 2 | 2 | 2 | 2 | 2 | 2 | 2 | 2 |
| | hydrogenated rosin zinc salt solution | | 5 | 5 | 5 | 5 | 5 | 5 | 5 | 5 | 5 | 5 |
| | red oxide | | 3 | 3 | 3 | 3 | 3 | 3 | 3 | 3 | 3 | 3 |
| | talc | | 9 | 9 | 9 | 9 | 9 | 9 | 9 | 9 | 9 | 9 |
| | zinc oxide | | 5 | 5 | 5 | 5 | 5 | 5 | 5 | 5 | 5 | 5 |
| | titanium oxide | | 0.3 | 0.3 | 0.3 | 0.3 | 0.3 | 0.3 | 0.3 | 0.3 | 0.3 | 0.3 |
| | Ethyl Silicate 28 | | 1 | 1 | 1 | 1 | 1 | 1 | 1 | 1 | 1 | 1 |
| | anhydrous gypsum | | 1 | 1 | 1 | 1 | 1 | 1 | 1 | 1 | 1 | 1 |
| | Disparlon A603-20X | | 0.4 | 0.4 | 0.4 | 0.4 | 0.4 | 0.4 | 0.4 | 0.4 | 0.4 | 0.4 |
| | Disparlon 4200-20 | | 0.2 | 0.2 | 0.2 | 0.2 | 0.2 | 0.2 | 0.2 | 0.2 | 0.2 | 0.2 |
| solvent | xylene | | 1.5 | 1.5 | 1.5 | 1.5 | 1.5 | 1.5 | 1.5 | 1.5 | 1.5 | 1.5 |
| sum | | | 100.0 | 100.0 | 100.0 | 100.0 | 100.0 | 100.0 | 100.0 | 100.0 | 100.0 | 100.0 |
| Test Example 1 rotary test | amount of coating film dissolved (*µ*m) | 3 months | 9 | 45 | 35 | 21 | 6 | 9 | 7 | 47 | 38 | 26 |
| | | 6 months | 20 | 81 | 65 | 40 | 13 | 21 | 17 | 89 | 70 | 41 |
| | | 12 months | 60 | 162 | 129 | 82 | 31 | 39 | 64 | 155 | 120 | 75 |
| | | 24 months | 154 | 335 | 265 | 164 | 51 | 83 | 152 | 319 | 258 | 158 |
| | evaluation of condition of coating film after 24 months | | AA | AA | AA | AA | AA | AA | AA | AA | AA | AA |
| Test Example 2 antifouling test | 12 months | | AA | AA | AA | AA | AA | AA | AA | AA | AA | AA |
| | 24 months | | A | A | A | A | AA | AA | AA | A | A | A |
| Test Example 3 Wet and dry cycle test | 6 months | | O | O | O | O | O | O | O | O | O | O |

### [Table 7]

**Table 7**

| component | | | Comparative Example | | | |
|---|---|---|---|---|---|---|
| | | | 1 | 2 | 3 | 4 |
| copolymer solution (P) | T1 | | 18 | | | |
| | T2 | | | 18 | | |
| | T3 | | | | 18 | |
| | T4 | | | | | 18 |
| antifouling agent | cuprous oxide | | 35 | 35 | 35 | 35 |
| | copper pyrithione | | 1.5 | 1.5 | 1.5 | 1.5 |
| | copper (I) thiocyanate | | 1 | 1 | 1 | 1 |
| | Zineb | | 1 | 1 | 1 | 1 |
| | SeaNine 211 | | 3 | 3 | 3 | 3 |
| | Econea | | 1 | 1 | 1 | 1 |
| | medetomidine | | 0.1 | 0.1 | 0.1 | 0.1 |
| other additives | chlorinated paraffin | | 1 | 1 | 1 | 1 |
| | tris (2-ethylhexyl) trimellitic acid | | 1 | 1 | 1 | 1 |
| | rosin zinc salt solution | | 7 | 7 | 7 | 7 |
| | gum rosin solution | | 2 | 2 | 2 | 2 |
| | hydrogenated rosin solution | | 2 | 2 | 2 | 2 |
| | hydrogenated rosin zinc salt solution | | 5 | 5 | 5 | 5 |
| | red oxide | | 3 | 3 | 3 | 3 |
| | talc | | 9 | 9 | 9 | 9 |
| | zinc oxide | | 5 | 5 | 5 | 5 |
| | titanium oxide | | 0.3 | 0.3 | 0.3 | 0.3 |
| | Ethyl Silicate 28 | | 1 | 1 | 1 | 1 |
| | anhydrous gypsum | | 1 | 1 | 1 | 1 |
| | Disparlon A603-20X | | 0.4 | 0.4 | 0.4 | 0.4 |
| | Disparlon 4200-20 | | 0.2 | 0.2 | 0.2 | 0.2 |
| solvent | xylene | | 1.5 | 1.5 | 1.5 | 1.5 |
| sum | | | 100.0 | 100.0 | 100.0 | 100.0 |
| Test Example 1 rotary test | amount of coating film dissolved (*µ*m) | 3 months | 20 | 63 | 8 | 54 |
| | | 6 months | 44 | 119 | 21 | 95 |
| | | 12 months | 110 | 205 | 53 | 171 |
| | | 24 months | 230 | 314 | 142 | 289 |
| | evaluation of condition of coating film after 24 months | | AA | C | AA | C |
| Test Example 2 antifouling test | 12 months | | AA | AA | AA | AA |
| | 24 months | | A | A | A | A |
| Test Example 3 Wet and dry cycle test | 6 months | | X | X | X | X |

### <Antifouling agent>

cuprous oxide: product name "NC-301" (available from NISSIN CHEMCO LTD.)
copper pyrithione: product name "copper Omadine" (available from Arch Chemical, Inc.)
copper thiocyanate (I): product name "Copper thiocyanate (I)" (available from by Wako Pure Chemical Industries, Ltd.)
Zineb: product name "Zineb" (available from Sigma-Aldrich, Inc.)
Sea Nine: product name "Sea Nine 211", 4,5-dichloro-2-n-octyl-3-isothiazoline (30% solids xylene solution, available from Rohm & Haas, Inc.)
Econia: product name "Econea 028" 2-(p-chlorophenyl)3-cyano-4-bromo-5-trifluoromethyl pyrrole, (available from JANSSEN PMP)
medetomidine: product name "4-(1-(2,3-Dimethylphenyl) ethyl)-1H-imidazole" (available from Wako Pure Chemical Industries, Ltd.)

### <Other additives>

chlorinated paraffin; product name "EMPARA A-40S" (available from Tosoh Corporation)
tris (2-ethylhexyl) trimellitic acid: product name "Tris (2-ethylhexyl) trimellitic acid" (available from TOKYO CHEMICAL INDUSTRY CO., LTD.)
rosin zinc salt solution: The one produced in Production Example 41 was used.
hydrogenated rosin zinc salt solution: The one produced in Production Example 42 was used.
gum rosin solution: xylene solution (50% solids) of Chinese gum rosin (WW)
hydrogenated gum rosin solution: 50% solids xylene solution of product name "HYPALE CH" (available from ARAKAWA CHEMICAL INDUSTRIES, LTD.)
red oxide: product name "Bengarakingyoku" (available from Morishitabengara Corporation)
talc: product name "CROWN TALC 3S" (available from matsumura sangyo Co., Ltd.)
zinc oxide: product name "zinc oxide II" (available from Seido Chemical Industry Co., Ltd.)
titanium oxide: product name "FR-41" (available from FURUKAWA CO., LTD.)
Ethyl Silicate 28: tetraethoxysilane: product name "Ethyl Silicate 28" (available from COLCOAT CO., LTD.)
anhydrous gypsum: product name "D-1" (NORITAKE CO., LIMITED)
Disparlon A603-20X: amide thixotropic agent: product name "Disparlon A603-20X" (available from Kusumoto Chemicals, Ltd.)
Disparlon 4200-20: polyethylene oxide thixotropic agent: product name "Disparlon 4200-20" (available from Kusumoto Chemicals, Ltd.)

### <Test Example 1(Dissolution test of coating film (rotary test))>

A rotating drum with a diameter of 515 mm and a height of 440 mm was attached to the center of the water tank so that it could be rotated by a motor. Further, a cooling device for keeping the temperature of seawater constant and a pH automatic controller for keeping the pH of seawater constant were attached.

A test plate was prepared according to the following method.

First, a rust preventive coating (epoxy vinyl A/C) was applied on a titanium plate (71×100×0.5 mm) and dried so that the thickness of the film after drying is about 100 µm. Then, each of the coating compositions obtained in Examples 1 to 30 was applied on the rust preventive coating film so that the thickness after drying was about 400 µm. Test plates were prepared by drying at 40°C for 3 days.

The prepared test plates were fixed to the rotary drum of the rotary device of the above device so that they came into contact with seawater, and the rotary drum was rotated at a speed of 20 knots. During the rotating, the temperature of seawater was kept at 25°C, the pH of seawater was kept at 8.0 to 8.2, and the seawater was replaced every two weeks.

The initial film thickness and the remaining film thickness after 3, 6, 12, and 24 months of each test plate were measured with a shape measurement laser microscope VK-X100 manufactured by Keyence Corporation, and from the difference of the film thicknesses, the thickness of the coating film dissolved was calculated to obtain the amount of coating film dissolved. Further, after the rotary test (after 24 months), the test plates were dried, and the surface of each coating film was observed with the naked eye or with a microscope to evaluate the condition of the coating film. The results are shown in Tables 4 to 7.
AA: No defects were observed.
A: Hairline cracks were observed on part of the coating film.
B: Hairline cracks were observed on the entire surface of the coating film.
C: Defects such as cracks, blisters, or peelings were observed on the coating film.

### <Test Example 2 (antifouling test)>

Each of the antifouling coating compositions obtained in Examples 1 to 30 was applied on both sides of a hard vinyl chloride board (100×200×2 mm) so that the thickness of the coating film after drying was about 200 µm, and dried at room temperature for 3 days to obtain a test plate. This test plate was immersed in 2.0 m below sea level in Owase City, Mie Prefecture, and fouling on the test plate caused by adhesion was observed after 12 months and 24 months.

The evaluation was determined by visually observing the condition of the coating film surface according to the following criteria. The results are shown in Tables 4 to 7.
AA: Fouling organisms such as shellfish and algae do not adhere, and no slime adheres.
A: Level where fouling organisms such as shellfish and algae do not adhere, slime which can be removed with a brush adheres.
B: Level where fouling organisms such as shellfish and algae do not adhere, but slime which cannot be removed even by wiping strongly with a brush adheres.
C: Level where fouling organisms such as shellfish and algae adhere.

### <Test Example 3 (Wet and dry cycle test of the coating)>

Each of the antifouling coating composition was applied onto a glass plate by using a 400 µm applicator to obtain a test plate. The test plate was subjected to the test in which immersion in fresh water at 40°C for 12 hours and exposure in air for 12 hours were repeated for 6 months, and then the physical properties of the test plate were visually evaluated. Those without peeling were marked with O, and those with peeling were marked with X. The results are shown in Tables 4 to 7.

### <Test results>

From Test Examples 1 to 3, it was found that the antifouling coating films formed by using the antifouling coating compositions of the Examples of the present invention can maintain the dissolution of the coating film for a long period of time, exhibit good antifouling performance and realize good antifouling performance even in the draft section, where adhesion of aquatic fouling organisms is easy to occur.

## Claims

1. A copolymer for an antifouling coating composition obtained by copolymerizing a monomer (a) and an ethylenically unsaturated monomer (b) other than the monomer (a), wherein:
the monomer (a) is represented by general formula (1); 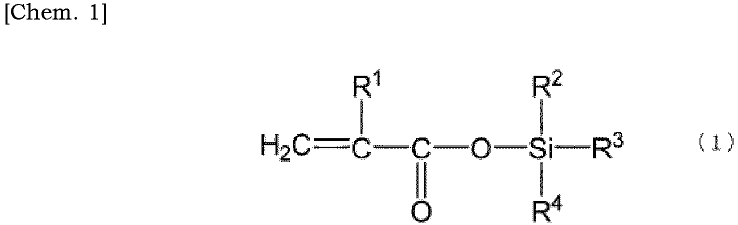
in the general formula (1), R¹ represents a hydrogen or a methyl group, R² and R³ represent an isopropyl group, and R⁴ represents an alkenyl group or a heteroaryl group.

2. The copolymer for the antifouling coating composition of Claim 1, wherein R⁴ in the general formula (1) is an alkenyl group.

3. The copolymer for the antifouling coating composition of Claim 1, wherein R⁴ in the general formula (1) is a heteroaryl group.

4. An antifouling coating composition, comprising
the copolymer of any one of Claims 1 to 3 and
an antifouling agent.

## Patentansprüche

1. Copolymer für eine bewuchshemmende Beschichtungszusammensetzung, erhalten durch Copolymerisieren eines Monomers (a) und eines ethylenisch ungesättigten Monomers (b), das von dem Monomer (a) verschieden ist, wobei:
das Monomer (a) durch die allgemeine Formel (1) dargestellt wird; 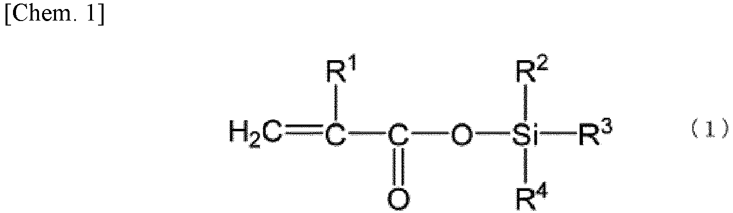
in der allgemeinen Formel (1) R¹ ein Wasserstoffatom oder eine Methylgruppe darstellt, R² und R³ eine Isopropylgruppe darstellen und R⁴ eine Alkenylgruppe oder eine Heteroarylgruppe darstellt.

2. Copolymer für die bewuchshemmende Beschichtungszusammensetzung nach Anspruch 1, wobei R⁴ in der allgemeinen Formel (1) eine Alkenylgruppe ist.

3. Copolymer für die bewuchshemmende Beschichtungszusammensetzung nach Anspruch 1, wobei R⁴ in der allgemeinen Formel (1) eine Heteroarylgruppe ist.

4. Bewuchshemmende Beschichtungszusammensetzung, umfassend
das Copolymer nach einem der Ansprüche 1 bis 3 und
ein bewuchshemmendes Mittel.

## Revendications

1. Copolymère pour une composition de revêtement antisalissure obtenu en copolymérisant un monomère (a) et un monomère éthyléniquement insaturé (b) autre que le monomère (a), dans lequel :
le monomère (a) est représenté par la formule générale (1) ; 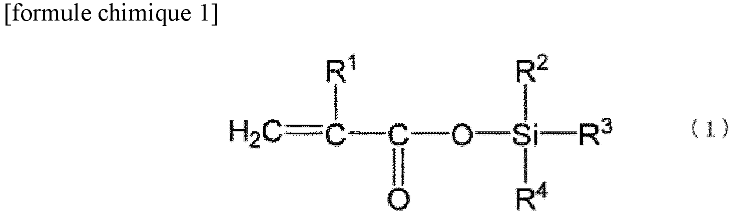
dans la formule générale (1), R¹ représente un hydrogène ou un groupe méthyle, R² et R³ représentent un groupe isopropyle, et R⁴ représente un groupe alcényle ou un groupe hétéroaryle.

2. Copolymère pour la composition de revêtement antisalissure selon la revendication 1, dans lequel R⁴ dans la formule générale (1) est un groupe alcényle.

3. Copolymère pour la composition de revêtement antisalissure selon la revendication 1, dans lequel R⁴ dans la formule générale (1) est un groupe hétéroaryle.

4. Composition de revêtement antisalissure, comprenant
le copolymère selon l'une quelconque des revendications 1 à 3 et
un agent antisalissure.
